# DEMANDE DE BREVET EUROPEEN

(11) **EP 0 780 701 A1**
(43) Date de publication de la demande: **25.06.1997**
(21) Numéro de dépôt: 96402849.2
(22) Date de dépôt: 20.12.1996
(51) Int. Cl.: G01V 1/00, G01V 11/00

(54) **Installation de surveillance sismique d'une zone souterraine renfermant un fluide**

(30) Priorité: 22.12.1995 FR 9515346
(71) Demandeur: GAZ DE FRANCE, 75017 Paris (FR)
(72) Inventeur: Huguet, Frédéric, 95100 Argenteuil (FR)
(74) Mandataire: Thévenet, Jean-Bruno

(57) **Abrégé**

L'installation de surveillance sismique comprend au moins une conduite (37) placée au voisinage de la surface du sol (1) au-dessus de la zone souterraine à surveiller renfermant un ou plusieurs fluides, la conduite (37) débouchant à ses deux extrémités au-dessus de la surface du sol (1) et étant remplie d'un fluide dans lequel est disposé au moins un organe actif (12, 22) constitué par une source sismique dont une première extrémité est reliée par un câble (33) de traction, d'alimentation et d'exploitation de l'organe actif (12, 22) à un treuil de traction (34) et une deuxième extrémité est reliée par un câble de rappel (35) à un treuil de rappel (36) assurant une tension des câbles. Le treuil de traction (34) et le treuil de rappel (36) sont disposés à l'extérieur de la conduite (37), et l'un au moins de ces treuils est muni de moyens de mesure de la longueur du câble (33, 35) avec lequel il coopère. L'ensemble des treuils, des câbles et des organes actift introduits dans la conduite (37) sont amovibles et peuvent être utilisés pour des mesures sur plusieurs sites, le positionnement demeurant précis lors de réutilisations sur un même site à des intervalles de temps éloignés.

## Description

La présente invention a pour objet une installation de surveillance sismique d'une zone souterraine renfermant au moins un fluide, comprenant au moins un dispositif actif d'émission sismique et au moins un dispositif de réception sensible aux ondes sismiques.

Il est courant de stocker un fluide, et plus particulièrement un gaz combustible, dans des réservoirs souterrains qui peuvent être constitués par des roches poreuses ou cavités, situées à plusieurs centaines de mètres sous le niveau de la surface du sol. La zone souterraine renfermant un fluide peut aussi être constituée par un gisement pétrolier.

Le contenu en fluide d'un réservoir souterrain évolue avec le temps. En particulier, dans le cas d'un réservoir de gaz, il est nécessaire de surveiller la façon dont est piégé le gaz et l'état de saturation du réservoir. C'est pourquoi diverses méthodes ont déjà été proposées pour déterminer à intervalles périodiques la quantité de fluide, plus particulièrement de gaz, située dans une roche souterraine.

Selon une méthode connue, on procède au forage de puits périphériques autour de la zone souterraine de stockage. Ces puits permettent une observation de la façon dont est piégé le gaz. En paticulier, des techniques sismiques peuvent être utilisées pour déceler les variations de niveau et de saturation du fluide stocké. En effet, la présence d'un fluide tel qu'un gaz modifie la vitesse du son, la densité, l'impédance acoustique de la roche-réservoir. Toutefois, l'équipement nécessaire pour réaliser de tels contrôles est généralement coûteux et d'une mise en oeuvre délicate par rapport à l'environnement. De façon plus particulière, il est généralement nécessaire d'effectuer des contrôles intermittents espacés. répartis sur plusieurs années et effectués à plusieurs mois d'intervalle. Par suite, si le matériel de contrôle est immobilisé à poste fixe dans son intégralité, cela peut s'avérer très pénalisant en termes de coût, puisque ce matériel présente lui-même une valeur importante et ne peut être dans ce cas réservé qu'à une seule installation. Si en revanche le même matériel de contrôle est utilisé pour plusieurs sites différents, il est certes mieux rentabilisé mais il se pose alors des problèmes de reproductibilité des mesures et de difficultés pour comparer les mesures d'une période à l'autre pour un même site, dès lors que les conditions opératoires ne sont pas suffisamment semblables.

Le document EP-A-0.547.961 décrit un exemple de système commun de surveillance d'un gisement souterrain installé à poste fixe, dans lequel des ensembles de réception tels que des géophones ou des hydrophones, et des capteurs d'état sont disposés à poste fixe à des emplacements différents le long d'un ou de plusieurs puits forés jusque dans un réservoir souterrain, une source sismique étant elle-même disposée à la surface du sol ou dans un autre puits. Un tel système de surveillance est relativement coûteux à installer et à exploiter.

L'invention vise précisément à remédier aux inconvénients précités et à permettre notamment d'effectuer une surveillance d'un réservoir souterrain de stockage de fluide de façon efficace et relativement peu coûteuse en utilisant des méthodes sismiques mises en oeuvre de façon parfaitement reproductible.

Ces buts sont atteints conformément à l'invention grâce à une installation de surveillance sismique d'une zone souterraine renfermant au moins un fluide, comprenant au moins un dispositif actif d'émission sismique et au moins un dispositif de réception sensible aux ondes sismiques,
caractérisée en ce que, parmi le groupe des dispositifs d'émission et le groupe des dispositifs de réception, pour au moins un groupe, chaque dispositif comprend une conduite essentiellement horizontale ou peu inclinée par rapport à l'horizontale, en contact avec le sol ou le sous-sol, par au moins une partie de sa paroi exteme, disposée au voisinage de la surface du sol au-dessus de la zone souterraine et recouverte de matière solide ou liquide, la conduite débouchant à ses deux extrémités au-dessus de la surface du sol et étant remplie d'un fluide dans lequel est disposé un organe actif dont une première extrémité est reliée par un câble de traction, d'alimentation et d'exploitation de l'organe actif à un treuil de traction et une deuxième extrémité est reliée par un câble de rappel à un treuil de rappel, le treuil de traction et le treuil de rappel étant disposés au-dessus de la surface du sol à l'extérieur de la conduite, l'un au moins de ces treuils étant muni de moyens de mesure de la longueur du câble avec lequel il coopère et au moins l'ensemble comprenant les treuils de traction et de rappel, les câbles de traction et de rappel et l'organe actif introduit dans la conduite étant amovible.

Selon une première série de modes de réalisation possibles, chaque dispositif d'émission comprend une conduite fixe enterrée à une profondeur inférieure à environ cinq mètres sous la surface du sol ainsi qu'un ensemble amovible comprenant un organe actif constitué par une source sismique, un câble de traction et d'alimentation de la source sismique, un treuil de traction, un câble de rappel et un treuil de rappel.

Dans ce cas, selon une première variante possible, les dispositifs de réception comprennent des capteurs acoustiques ou sismiques amovibles disposés au niveau de la surface du sol ainsi qu'un module extérieur transportable comprenant des moyens d'alimentation des capteurs et des moyens d'exploitation des informations délivrées par ces capteurs.

Selon une deuxième variante, les dispositifs de réception comprennent des capteurs acoustiques ou sismiques fixes enterrés à faible profondeur au voisinage des conduites enterrées fixes ainsi qu'un module extérieur transportable comprenant des moyens d'alimentation des capteurs et des moyens d'exploitation des informations délivrées par ces capteurs.

Selon encore une troisième variante, les dispositifs de réception comprennent des capteurs acoustiques ou sismiques disposés dans un puits essentiellement vertical ainsi qu'un module extérieur transportable comprenant des moyens d'alimentation des capteurs et des moyens d'exploitation des informations délivrées par ces capteurs.

Les conduites enterrées des dispositifs d'émission peuvent être constituées par des tubes haute pression, notamment métalliques, qui se dilatent légèrement pour transmettre la pression.

Selon une deuxième série de modes de réalisation possibles, chaque dispositif de réception comprend une conduite fixe enterrée à une profondeur inférieure à environ cinq mètres sous la surface du sol ainsi qu'un ensemble amovible comprenant un organe actif constitué par un capteur acoustique ou sismique, un câble de traction, d'alimentation et d'exploitation du capteur acoustique ou sismique, un treuil de traction, un câble de rappel et un treuil de rappel.

Dans ce cas, selon une première variante, les dispositifs d'émission sismique comprennent des sources sismiques placées dans un moyen de transport au-dessus de la surface du sol et associées à des moyens d'alimentation des sources sismiques.

Selon une deuxième variante, les dispositifs d'émission sismique comprennent des sources sismiques fixes enterrées à faible profondeur au voisinage des conduites enterrées fixes des dispositifs de réception ainsi qu'un module extérieur transportable ou enterré comprenant des moyens d'alimentation des sources sismiques.

Selon encore une troisième variante, les dispositifs d'émission sismique comprennent des sources sismiques disposées dans un puits essentiellement vertical ainsi qu'un module extérieur fixe ou transportable comprenant des moyens d'alimentation des sources sismiques.

Les conduites enterrées des dispositifs de réception peuvent être constituées par des tubes en polyéthylène.

Toutefois, quel que soit le mode de réalisation envisagé, les conduites enterrées du dispositif d'émission ou de réception peuvent encore être constituées par des tubes en acier tressé enveloppé par un polymère.

Selon une troisième série de modes de réalisation possibles, chaque dispositif d'émission ou de réception comprend une conduite fixe enterrée à une profondeur inférieure à environ cinq mètres sous la surface du sol ainsi qu'un ensemble amovible comprenant un organe actif, un câble de traction d'alimentation et d'exploitation de l'organe actif, un treuil de traction, un câble de rappel et un treuil de rappel

Dans ce cas, selon une première variante, les conduites enterrées des dispositifs d'émission sont sensiblement parallèles aux conduites enterrées des dispositifs de réception.

Selon une deuxième variante, les conduites enterrées des dispositifs d'émission sont sensiblement perpendiculaires aux conduites enterrées des dispositifs de réception.

Selon un mode de réalisation particulier, le dispositif d'émission et le dispositif de réception sont combinés en un dispositif mixte unique comprenant une conduite fixe unique et un ensemble amovible comprenant un premier organe actif constitué par une source sismique, un deuxième organe actif constitué par un capteur acoustique ou sismique relié mécaniquement par un câble intermédiaire à la source sismique, un câble unique de traction, d'alimentation et d'exploitation de la source sismique et du capteur acoustique ou sismique, un treuil de traction, un câble de rappel unique et un treuil de rappel.

Dans ce cas, selon un premier mode de mise en oeuvre, la conduite fixe unique est enterrée à une profondeur inférieure à environ cinq mètres sous la surface du sol.

Selon un autre mode de mise en oeuvre possible, la conduite fixe unique est disposée entre la surface du sol dans une zone immergée telle qu'une étendue lacustre, marine ou océanique et le treuil de traction, le treuil de rappel, les moyens de mesure de la longueur du câble ainsi qu'un module transportable comprenant des moyens d'alimentation des premier et deuxième organes actifs sont placés dans des embarcations flottant sur ladite étendue lacustre, marine ou océanique.

Dans tous les cas, l'installation de surveillance peut comprendre un module transportable comprenant des moyens d'alimentation des dispositifs actifs d'émission sismique et des moyens d'exploitation des informations délivrées par les dispositifs de réception.

D'autres caractéristiques et avantages de l'invention ressortiront de la description suivante de modes particuliers de réalisation donnés à titre d'exemples non limitatifs, en référence aux dessins annexés, sur lesquels :
- la Figure 1 est une vue schématique en coupe selon un plan vertical montrant l'installation d'une source sismique dans une canalisation enterrée à faible profondeur conformément à un premier mode de réalisation de l'invention ;
- la Figure 2 est une vue schématique en coupe selon un plan vertical montrant l'installation de récepteurs acoustiques ou sismiques dans une canalisation enterrée à faible profondeur conformément à un deuxième mode de réalisation de l'invention ;
- la Figure 3 est une vue schématique de dessus, montrant l'installation conjointe d'une source sismique et de récepteurs dans des canalisations enterrées à faible profondeur conformément à un troisième mode de réalisation de l'invention permettant une surveillance en deux dimensions ;
- la Figure 4 est une vue schématique de dessus, montrant l'installation conjointe de sources sismiques et de récepteurs dans des canalisations enterrées à faible profondeur et disposées selon deux directions perpendiculaires entre elles, conformément à un quatrième mode de réalisation de l'invention permettant une surveillance en trois dimensions ;
- la Figure 5 est une vue schématique en coupe selon un plan vertical montrant une variante de l'installation de la Figure 1, dans laquelle des récepteurs sont placés à la surface du sol ;
- la Figure 6 est une vue schématique en coupe selon un plan vertical montrant une autre variante de l'installation de la Figure 1, dans laquelle des récepteurs sont enterrés à faible profondeur ;
- la Figure 7 est une vue schématique en coupe selon un plan vertical montrant encore une autre variante de l'installation de la Figure 1, dans laquelle des récepteurs sont disposés dans un puits central ;
- la Figure 8 est une vue schématique en coupe selon un plan vertical montrant une variante de l'installation de la Figure 2, dans laquelle une source sismique déplaçable est placée à la surface du sol ;
- la Figure 9 est une vue schématique en coupe selon un plan vertical montrant une autre variante de l'installation de la Figure 2, dans laquelle des sources sismiques sont enterrées à faible profondeur, et
- la Figure 10 est une vue schématique en coupe selon un plan vertical montrant encore une autre variante de l'installation de la Figure 2, dans laquelle une source sismique est disposée dans un puits vertical;
- la Figure 11 est une vue schématique en coupe selon un plan vertical montrant l'installation conjointe d'une source sismique et de récepteurs acoustiques ou sismiques dans une même canalisation enterrée à faible profondew conformément à un cinquième mode de réalisation de l'invention ; et
- la Figure 12 est une vue schématique en coupe selon un plan vertical montrant l'installation conjointe d'une source sismique et de récepteurs acoustiques ou sismiques dans une même canalisation posée sur le sol en étant immergée au fond d'une étendue d'eau, conformément à un mode particulier de mise en oeuvre de l'invention.

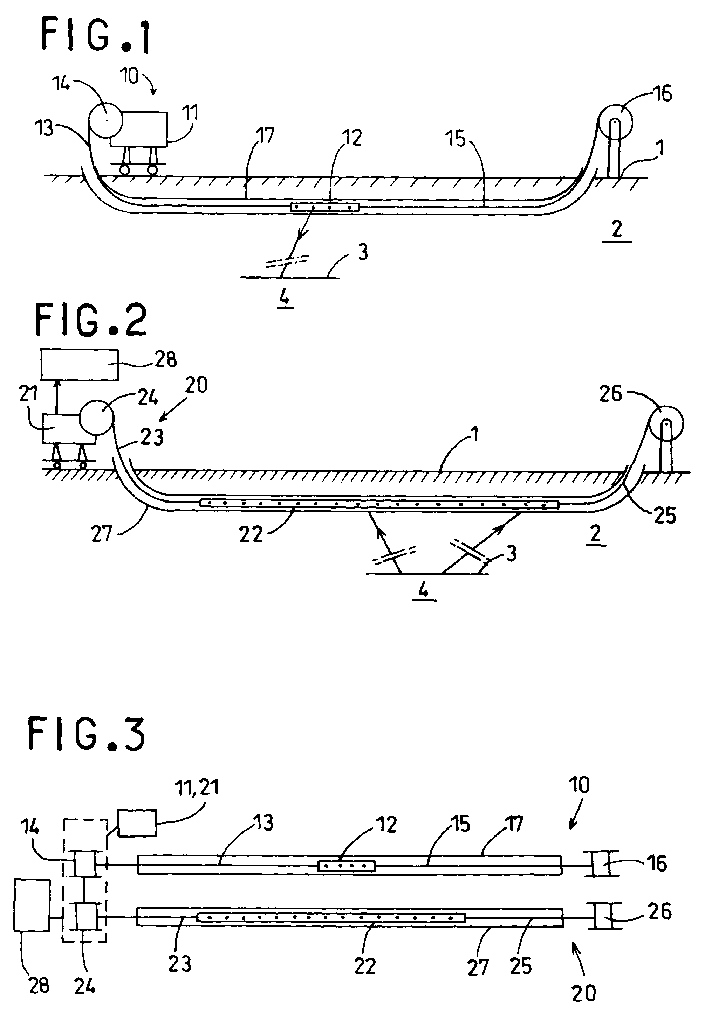

On a représenté schématiquement sur la Figure 1 le niveau de la surface du sol 1 qui délimite une zone souterraine 2 dans laquelle se trouve, à une profondeur qui peut être de l'ordre de plusieurs centaines de mètres, une roche-réservoir 4 dont la dimension dans le sens vertical peut être de l'ordre de quelques mètres ou quelques dizaines de mètres et la dimension dans le sens horizontal peut être de l'ordre de quelques centaines de mètres à plusieurs kilomètres. La surface supérieure du fluide contenu dans la roche 4 qui constitue le réservoir porte la référence 3.

La roche réservoir 4 peut être une cavité naturelle formée dans des carbonates ou roches poreuses qui est remplie d'eau et dans laquelle du gaz devant être stocké est introduit à la place de l'eau. La roche-réservoir 4 peut aussi être constituée par un gisement pétrolifère.

En pratique, il est souvent nécessaire de pouvoir surveiller le niveau de gaz et/ou la saturation dans un réservoir souterrain tel que celui défini par la cavité 4. Cette surveillance peut avoir lieu lors d'une opération de remplissage ou au contraire lors de l'utilisation qui fait intervenir des prélèvements successifs espacés et répartis sur une longue durée.

La surveillance du niveau de gaz s'effectue par des méthodes sismiques. A l'aide d'une source sismique, des vibrations ou ondes impulsionnelles sont émises dans le sous-sol et se propagent dans la zone souterraine dans laquelle est situé le réservoir défini par la cavité 4. On peut utiliser plusieurs sources sismiques ou déplacer une source sismique ou un groupe de sources sismiques afin de couvrir toute la surface du réservoir 4. Les vibrations émises par la source sismique sont réfléchies par les différentes couches du sous-sol et notamment par la surface supérieure 3 du fluide contenu dans le réservoir 4. Les vibrations réfléchies sont détectées par des moyens de réception constitués par des capteurs de type acoustique ou sismique tels que des géophones ou des hydrophones, ce qui permet de reconstituer une image du sous-sol. Par comparaison des images reconstituées à des instants différents (qui peuvent être espacés de quelques jours ou de plusieurs semaines ou mois) à partir des informations délivrées par les moyens de réception, il est possible de contrôler l'évolution du niveau du fluide contenu dans le réservoir 4.

La surveillance implique d'effectuer à des instants différents, des mesures et la reconstitution d'un profil pour une même zone dans des conditions les plus semblables possibles, afin de garantir la fiabilité des informations relatives au niveau de fluide ou à la saturation du réservoir, qui permettent à leur tour de piloter avec précision l'évolution du stockage.

Sur la Figure 1, on n'a pas représenté les moyens de réception et sur la Figure 2, on n'a pas représenté la source sismique, afin de mieux faire apparaître les caractéristiques propres à la présente invention. Les Figures 3 à 10 montrent en revanche des systèmes complets de surveillance comprenant à la fois un dispositif actif d'émission sismique et un dispositif de réception sensible aux ondes sismiques.

On voit sur la Figure 1 un dispositif actif 10 d'émission sismique conforme à l'invention qui comprend en premier lieu une conduite 17 enterrée à relativement faible profondeur sous le niveau de la surface du sol 1, par exemple à une profondeur de l'ordre de 1 mètre ou 2 mètres et qui, de préférence, reste inférieure à environ 5 mètres. La conduite 17 est de préférence horizontale ou peu inclinée par rapport à l'horizontale ou la surface du sol 1 et débouche à ses deux extrémités au-dessus du niveau du sol 1. La conduite 17 s'étend sur une longueur qui peut être de plusieurs centaines de mètres ou plusieurs kilomètres et peut couvrir toute l'étendue du réservoir 4 ou seulement une partie de celui-ci. La conduite 17, dont le diamètre peut être de l'ordre de 10 à 50 cm et de préférence de l'ordre de 20 à 30 cm, peut être réalisée à l'aide de tubes haute pression, par exemple métalliques, qui se dilatent légèrement pour transmettre la pression émise par une source sismique 12 placée à l'intérieur de la conduite 17.

La conduite 17 est remplie d'un fluide qui peut être par exemple de l'air ou de l'eau.

La conduite 17 est de préférence installée à poste fixe et, dans la mesure où elle est enterrée, ne gêne pas l'exploitation du sol dans la partie voisine de la surface 1. Par ailleurs, la mise en place de la conduite 17 n'entraîne pas de travaux trop importants puisque la conduite 17 est située à une profondeur de l'ordre de 1 à 3 mètres et non pas de plusieurs centaines de mètres comme les puits d'exploitation.

Lorsque des essais doivent être effectués pour déterminer le niveau de remplissage du réservoir 4 situé sous la conduite 17, un ensemble amovible coopérant avec cette conduite est installé pour le temps des essais. Cet ensemble amovible comprend essentiellement une source sismique 12 dont une première extrémité est reliée par un câble 13 à un treuil de traction 14 et une deuxième extrémité est reliée par un câble 15 à un treuil de rappel 16 qui assure le maintien d'un tension mécanique sur les câbles 13, 15. Le câble 13 constitue à la fois un câble de traction et un câble d'alimentation en énergie et de déclenchement de la source sismique 12 qui est ainsi reliée par le câble d'alimentation 13 à un module 11 qui comprend des moyens d'alimentation en énergie et de commande du déclenchement de la source sismique 12. Le câble 15 relié au treuil de rappel 16 est associé à des moyens de repérage de longueur permettant de positionner la source sismique 12 de façon repérable et reproductible. Ces moyens de repérage peuvent aussi être associés au câble de traction 13.

L'installation 20 de réception d'ondes sismiques de la Figure 2 est analogue à celle de la Figure 1 et la conduite enterrée 27 peut être similaire à la conduite 17 et se trouve disposée au-dessus du réservoir 4. La conduite 27 peut être constituée par exemple par des tubes de polyéthylène.

De même, les câbles 23, 25 et les treuils 24, 26 peuvent être analogues aux câbles 13, 15 et aux treuils 14, 16 de la Figure 1. La source sismique 12 est toutefois remplacée par un capteur acoustique ou sismique 22 qui est relié à un module d'alimentation 21 et à un module d'exploitation 28 par le câble 23 qui sert à la fois de câble de traction, de câble d'alimentation en énergie et de câble d'exploitation, (c'est-à-dire de transfert de données) pour le capteur 22. Le câble de rappel 25, comme le câble 15, qui est maintenu tendu, peut être associé à des moyens de repérage de longueur permettant de positionner le capteur 22 de façon repérable et reproductible. Ces moyens de repérage de longeur peuvent aussi être associés au câble de traction 23 plutôt qu'au câble 25.

Le capteur acoustique ou sismique 22 qui peut comprendre un ensemble de capteurs élémentaires successifs, de même que la source sismique 12, qui peut comprendre plusieurs sources ponctuelles successives, constituent des dispositifs allongés en forme de flûte se déplaçant dans le fluide introduit dans la conduite 27 respectivement la conduite 17. Au cours d'une séance d'essais, la source sismique 12 et/ou le capteur 22 peuvent ainsi présenter plusieurs positions successives différentes. Les treuils de traction 24 resp 14 et de rappel 26 resp 16 et les câbles associés 23, 25 resp 13, 15 permettent de déplacer facilement depuis l'extérieur le capteur 22 resp la source 12. Il est ainsi possible de déterminer des niveaux de gaz dans des réservoirs sur des surfaces étendues en utilisant un seul ensemble amovible coopérant avec des conduites enterrées à poste fixe.

La source flottante 12 peut être par exemple du type étinceleur, vibratoire ou explosion (par exemple d'un mélange gazeux combustible) et permet alors d'acquérir de façon continue en temps réel des données permettant de déterminer le niveau de gaz dans un réservoir souterrain. La source 12 peut encore être de type stationnaire en mouvement. La source 12 peut présenter des mouvements d'avance saccadés avec par exemple un temps d'avance, un temps d'arrêt, une phase de tir puis de nouveau un temps d'avance, un temps d'arrêt, une phase de tir, etc. Le capteur 22 peut lui-même être par exemple du type hydrophone.

Dans tous les cas, grâce au treuil de rappel 16 resp 26 et au câble de rappel 15 resp 25, la position de la source 12 resp du capteur 22 peut être maintenue et identifiée en permanence. Le module 28 constitue un laboratoire sismique d'enregistrement qui peut être disposé à proximité du module 21 d'alimentation en énergie du capteur 22.

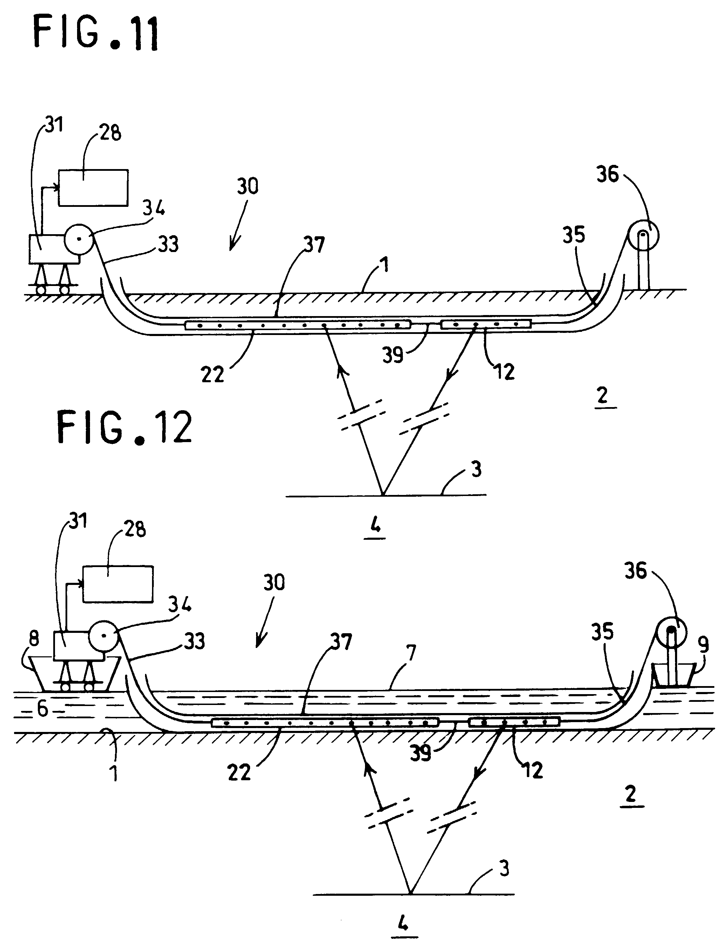

La Figure 3 montre en vue de dessus une installation complète de surveillance sismique d'une zone souterraine renfermant un fluide tel que le réservoir de gaz 4 des Figures 1 et 2. Dans le cas de la Figure 3, qui permet une surveillance en deux dimensions, des dispositifs 10, 20 tels que ceux décrits en référence aux Figures 1 et 2 sont juxtaposés, les conduites 17 et 27 étant sensiblement parallèles et horizontales mais disposées à des niveaux légèrement différents par rapport au niveau de la surface du sol 1. Les treuils de traction 14, 24 et les modules 11, 21, 28 peuvent être installés sur un premier véhicule et les treuils de rappel 16, 26 peuvent, le cas échéant, également être installés sur un deuxième véhicule situé à l'autre extrémité des conduites 17, 27. Selon un autre mode de réalisation, qui sera décrit plus loin en référence à la Figure 11, les dispositifs 10, 20 ne sont pas juxtaposés, mais combinés en un dispositif 30 unique.

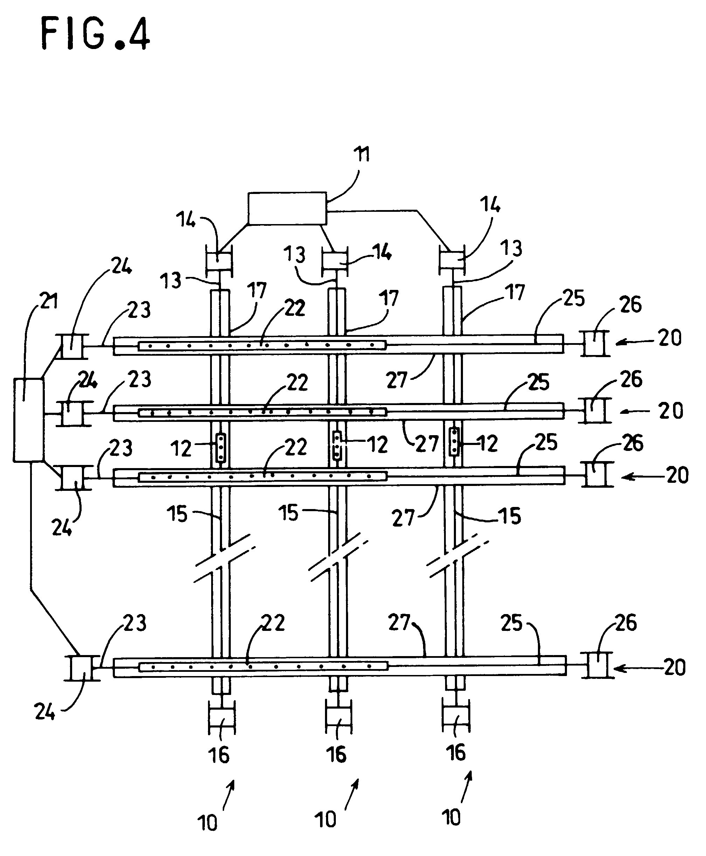

L'installation de la Figure 4 est analogue à celle de la Figure 3 mais permet une surveillance en trois dimensions dans la mesure où elle comprend plusieurs dispositifs actifs 10 d'émission sismique pouvant être semblables au dispositif 10 de la Figure 1 et plusieurs dispositifs 20 de réception sensibles aux ondes sismiques pouvant être semblables au dispositif 20 de la Figure 2, les conduites 17 des dispositifs 10 d'émission étant sensiblement horizontales, et les conduites 27 des dispositifs 20 de réception étant également sensiblement horizontales, mais disposées essentiellement perpendiculairement aux conduites 17. Dans ce cas, les conduites 17 présentent également une différence de niveau en hauteur par rapport aux conduites 27.

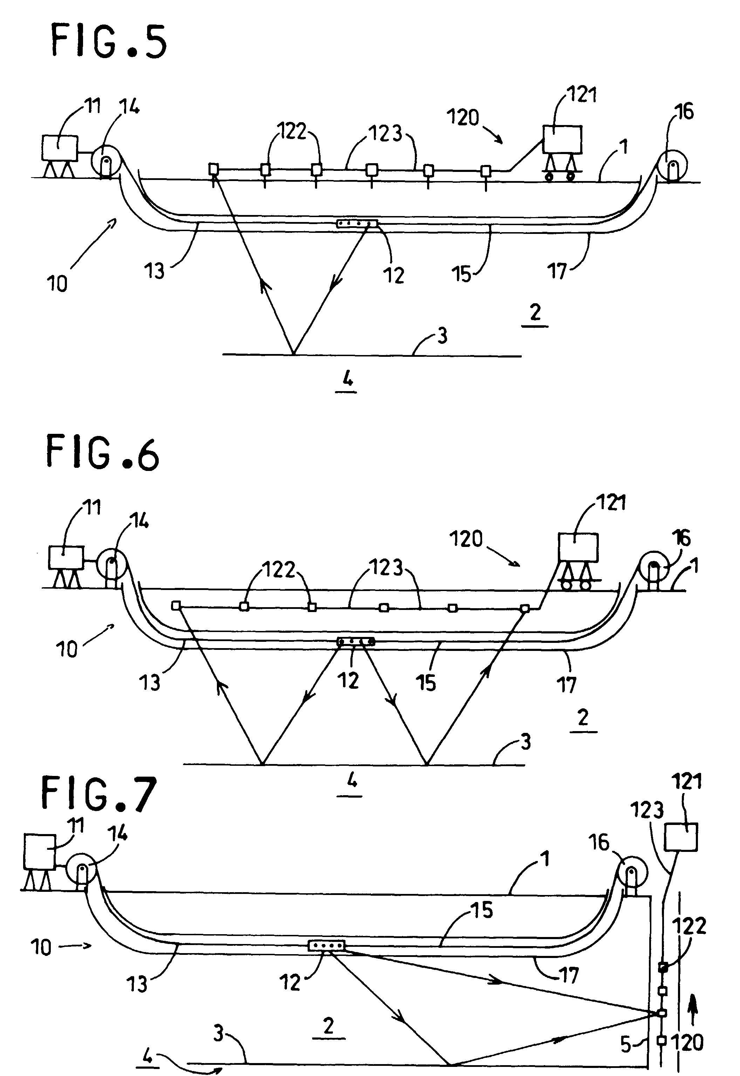

Les Figures 5 à 7 montrent des modes de réalisation comportant des dispositifs actifs 10 d'émission sismique tout à fait semblables au dispositif 10 de la Figure 1. Toutefois, dans le cas des variantes des Figures 5 à 7, le dispositif 20 de réception n'est pas réalisé exactement selon le mode de réalisation de la Figure 2.

Ainsi, dans le cas de la Figure 5, les dispositifs de réception 120 comprennent des capteurs acoustiques ou sismiques 122 amovibles qui sont disposés au niveau de la surface du sol 1, en étant simplement enfichés dans le sol d'une façon qui peut être amovible. Les capteurs 122 sont reliés entre eux et à un module extérieur transportable 121 par des câbles de liaison 123. Le module 121 comprend des moyens d'alimentation des capteurs 122 et des moyens de traitement et d'exploitation des informations délivrées par les capteurs 122. La source sismique 12 est elle-même alimentée à partir d'un module d'alimentation 11 comme dans le cas de la Figure 1.

Le mode de réalisation de la Figure 6 est semblable à celui de la Figure 5 mais les capteurs 122 sont cette fois fixes et enterrés à faible profondeur au-dessus de la conduite 17, par exemple à une profondeur de l'ordre de 0,50 m à 2 m. Les capteurs 122 sont reliés entre eux et à un module extérieur 121, qui peut être enterré ou transportable, par des câbles de liaison 123 comme dans le cas de la Figure 5.

Le mode de réalisation de la Figure 7 diffère de celui de la Figure 6 en ce que les capteurs acoustiques ou sismiques 122 ne sont pas enterrés mais disposés dans un puits 5 essentiellement vertical réalisé au voisinage du réservoir 4. Le module extérieur 121 et les câbles de liaison 123 peuvent être semblables aux éléments correspondants des modes de réalisation des Figures 5 et 6.

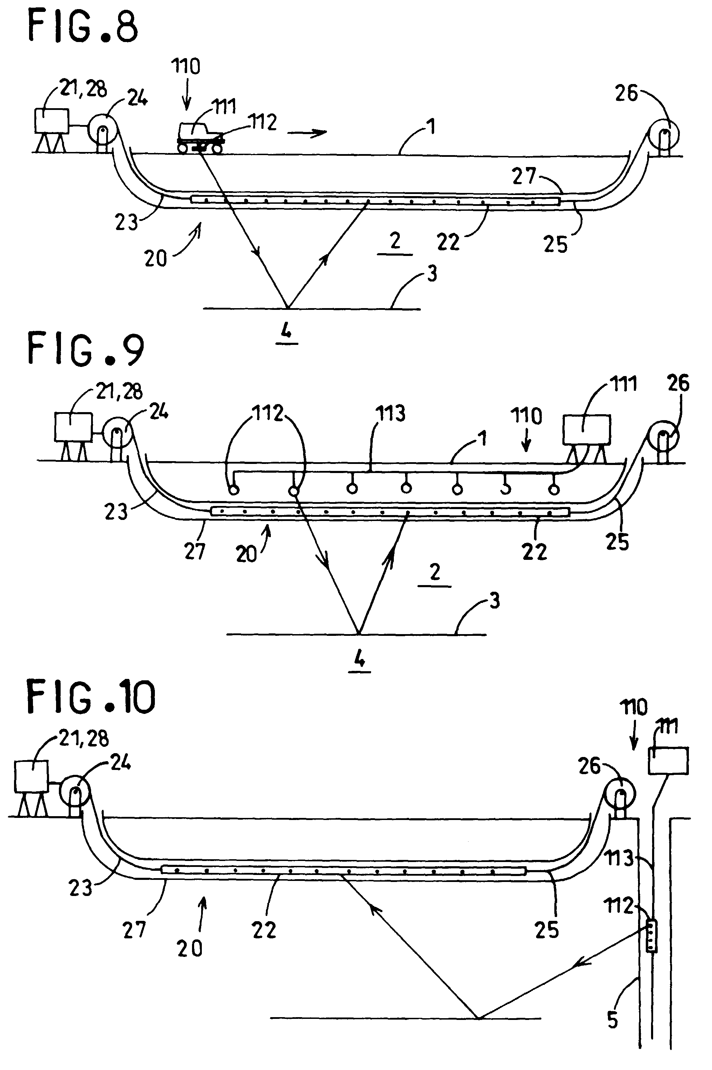

Les Figures 8 à 10 montrent des modes de réalisation comportant des dispositifs actifs 20 de réception d'ondes sismiques tout à fait semblables au dispositif 20 de la Figure 2. Toutefois, dans le cas des variantes de ces Figures 8 à 10, le dispositif 10 d'émission sismique n'est pas réalisé exactement selon le mode de réalisation de la Figure 1.

Ainsi, dans le cas de la Figure 8, le dispositif d'émission 110 comprend des sources sismiques 112 placées dans un moyen de transport qui se déplace au-dessus de la surface du sol 1 et comprend un module 111 d'alimentation des sources sismiques 112. Les capteurs 22 sont reliés à un module extérieur 21 d'alimentation des capteurs 22 et d'exploitation des signaux délivrés par les capteurs 22, comme dans le cas de la Figure 1.

Dans le mode de réalisation de la Figure 9, les sources 112 sont fixes et enterrées à faible profondeur au-dessus de la conduite 27, par exemple à une profondeur de l'ordre de 0,50 m à 2 m. Les sources élémentaires 112 sont reliées entre elles et à un module d'alimentation 111, qui peut être enterré ou transportable, par des câbles de liaison 113.

Dans le cas de la Figure 10, la source sismique 112 est disposée dans un puits 5 essentiellement vertical réalisé au voisinage du réservoir 4. Le module extérieur 111 d'alimentation de la source 112 et le câble de liaison 113 entre la source 112 et le module 111, qui font partie du dispositif 110 d'émission de vibrations, peuvent être semblables aux éléments correspondants de la Figure 9.

Quel que soit le mode de réalisation envisagé, les conduites 17, 27 peuvent être réalisées de différentes manières dès lors qu'elles sont capables de transmettre ou subir de légères déformations en fonction des variations de pression dues aux vibrations émises par les sources sismiques 12, 112, sans disloquer le terrain environnant. Selon un mode de réalisation possible, les conduites enterrées 17, 27 sont constituées par des tubes un acier tressé enveloppé par un polymère.

Un intérêt majeur de l'installation selon l'invention, lié à la mise en oeuvre de conduites 17, 27 ouvertes à leurs deux extrémités, est de permettre un repositionnement précis des sources 12 et des capteurs 22 par le simple repérage de la longueur du câble de traction 13, 23 ou, le cas échéant, de la longueur du câble de rappel 15, 25 dès lors que les câbles de rappel 15, 25 et les treuils de rappel 16, 26 maintiennent une tension des différents câbles. Il est ainsi possible de comparer les mesures d'une série d'essais à l'autre.

Par ailleurs, le fait que les conduites 17, 27 soient enterrées et que seuls les treuils 14, 24, 16, 26 et les modules d'alimentation et d'exploitation 11, 21, 28 soient en surface permet d'effectuer des mesures sans gêner l'environnement et l'occupation ou l'exploitation du sol.

La mise en oeuvre de l'installation selon l'invention s'avère également très économique du fait de l'utilisation du matériel amovible pour des exploitations successives sur plusieurs sites différents, seules les conduites 17, 27 étant enterrées à poste fixe.

Les modules d'alimentation et d'exploitation 11, 21, 28 ne seront pas décrits en détail car ils relèvent de techniques connues en soi. Ainsi, ces modules peuvent inclure des circuits de synchronisation du déclenchement de la source sismique 12 et de l'enregistrement des signaux émis par la source 12 et reçus par un capteur 22, les moyens de stockage des signaux sur un support d'enregistrement pouvant comprendre par exemple une bande magnétique ou tout autre type connu de moyen de stockage. L'alimentation et le déclenchement de la source peuvent être télécommandés. Selon la technique utilisée, les capteurs 22 peuvent nécessiter une alimentation (par exemple en télémétrie numérique) ou non (par exemple en télémétrie analogique). Dans tous les cas, les informations délivrées par les capteurs 22 doivent être transmises aux moyens de traitement 28.

Les sources sismiques 12, 112 peuvent être de différents types connus tels que des dispositifs à étincelles, à implosion (canon à air), à explosion d'une quantité de mélange air-gaz, à choc mécanique ou électromécanique, des dispositifs hydrauliques à surpression,...

Les capteurs 22 mobiles peuvent être du type hydrophone tandis que les capteurs 122 fixes peuvent être du type géophone.

On a représenté sur la Figure 11, un mode de réalisation particulier d'une installation de surveillance sismique selon l'invention, dans laquelle un dispositif actif d'émission sismique 10 et un dispositif 20 de réception sensible aux ondes sismiques sont combinés en un dispositif mixte unique 30 comprenant une conduite enterrée fixe unique 37 qui peut être analogue aux conduites 17 ou 27 des modes de réalisation précédents, et débouche à ses deux extrémités au-dessus du niveau du sol 1. Le dispositif mixte unique 30 comprend en outre un ensemble amovible qui inclut un premier organe actif constitué par une source sismique 12 et un deuxième organe actif constitué par un capteur acoustique ou sismique 22 relié mécaniquement par un câble intermédiaire 39 à la source sismique 12. L'ensemble amovible comprend en outre un câble unique 33 de traction, d'alimentation et d'exploitation de la source sismique 12 et du capteur acoustique ou sismique 22, qui coopère avec un treuil de traction 34, et un câble de rappel unique 35, qui coopère avec un treuil de rappel 36 de la même manière que les câbles de rappel 15 ou 25 coopèrent avec les treuils de rappel 16 ou 26.

Un module 31 d'alimentation peut regrouper la fonction du module 11 d'alimentation et de commande de déclenchement de la source sismique 12 et la fonction du module 21 d'alimentation du capteur acoustique ou sismique 22. Un module 28 d'exploitation des signaux délivrés par le capteur acoustique ou sismique 22 peut être associé au module 31 comme par exemple dans le mode de réalisation de la Figure 2.

Les treuils 34, 36 et les câbles 33, 35 peuvent être analogues respectivement aux treuils 14, 16 ou 24, 26 et aux câbles 13, 15 ou 23, 25 des Figures 1 et 2. On notera cependant que le câble 33 sert à la fois à la traction mécanique de la source sismique 12 et du capteur acoustique ou sismique 22, à l'alimentation en énergie de ces organes actifs 12, 22 à partir du module 31, à la commande du déclenchement de la source sismique 12 et au transfert de données à partir du capteur 22 en communication avec les modules 31, 28. Le câble de rappel 35 et le treuil de rappel 36 permettent de maintenir tendu en permanence le câble 33 d'entraînement de la source 12 et du capteur 22. Des moyens de repérage de longueur sont associés au câble de traction 33 ou au câble de rappel 35 et permettent ainsi de réaliser un positionnement précis et reproductible.

Dans les modes de réalisation décrits précédemment, les conduites fixes 17, 27, 37 ont été présentées comme enterrées à une relativement faible profondeur sous la surface du sol, c'est-à-dire comme étant en contact avec le sous-sol par toute la surface de leur paroi externe. L'invention est toutefois également applicable au cas de conduites fixes qui sont simplement posées sur le sol 1 et ne sont donc en contact avec le sol que par une partie de leur paroi externe. On a représenté sur la Figure 12 un tel exemple de mise en oeuvre de l'invention, qui s'applique au cas de cavités-réservoirs 4 renfermant un fluide, situées dans le sous-sol dans des régions où le niveau du sol terrestre 1 est immergé sous une grande masse de liquide 6, telle qu'une étendue lacustre, marine ou océanique. Dans ce cas, la surface 7 à l'air libre de la masse de liquide 6 peut être située à plusieurs centaines de mètres au-dessus d'un réseau de conduites 37. Dès lors qu'une conduite 37 est en contact avec le sol par au moins une partie de sa paroi externe, et est recouverte d'une masse de matière liquide telle que de l'eau, qui peut être identique ou non au fluide présent à l'intérieur de la conduite 37, le dispositif 30 décrit précédemment peut jouer pleinement son rôle de dispositif d'émission et de réception grâce à la source sismique 12 et au capteur acoustique ou sismique 22 qui peuvent jouer leur rôle de la même façon que dans les modes de réalisation décrits précédemment, notamment en référence à la Figure 11.

Dans le cas de la mise en oeuvre de la Figure 12, des embarcations 8, 9 flottant sur la masse de liquide 6 portent le treuil de traction 34, le treuil de rappel 36, les moyens de mesure de la longueur du câble 33, 35 ainsi qu'un module transportable comprenant des moyens d'alimentation des organes actifs 12, 22 et d'exploitation des informations délivrées par le capteur acoustique ou sismique 22.

L'installation selon l'invention peut ainsi s'appliquer dans des contextes géographiques très divers et conserve dans tous les cas ses avantages de souplesse d'utilisation grâce à la combinaison de moyens amovibles utilisables pendant la seule durée des essais et pouvant être facilement transportés d'un site à un autre, et de réseaux de conduites enterrées ou immergées à poste fixe mais pouvant être mises en place sans difficulté dès lors qu'elles reposent sur le sol ou sont enterrées à très faible profondeur.

## Revendications

1. Installation de surveillance sismique d'une zone souterraine renfermant au moins un fluide, comprenant au moins un dispositif actif (10; 110 ; 30) d'émission sismique et au moins un dispositif (20 ; 120 ; 30) de réception sensible aux ondes sismiques,
caractérisée en ce que, parmi le groupe des dispositifs d'émission (10; 30) et le groupe des dispositifs de réception (20 ; 30), pour au moins un groupe, chaque dispositif (10 resp. 20; 30) comprend une conduite (17 resp. 27 ;37) essentiellement horizontale ou peu inclinée par rapport à l'horizontale, en contact avec le sol ou le sous-sol par au moins une partie de sa paroi externe, disposée au voisinage de la surface du sol (1) au-dessus de la zone souterraine (4) et recouverte de matière solide ou liquide, la conduite (17 resp. 27; 37) débouchant à ses deux extrémités au-dessus de la surface du sol (1) et étant remplie d'un fluide dans lequel est disposé un organe actif (12 resp. 22) dont une première extrémité est reliée par un câble (13 resp. 23;33) de traction, d'alimentation et d'exploitation de l'organe actif (12 resp. 22) à un treuil de traction (14 resp. 24 ; 34) et une deuxième extrémité est reliée par un câble de rappel (15 resp. 25 ; 35) à un treuil de rappel (16 resp. 26; 36), le treuil de traction (14 resp. 24; 34) et le treuil de rappel (16 resp. 26 ; 36) étant disposés au-dessus de la surface du sol (1) à l'extérieur de la conduite (17 resp. 27 ; 37), l'un au moins de ces treuils (14, 16 resp. 24, 26; 34, 36) étant muni de moyens de mesure de la longueur du câble (13, 15 resp. 23, 25 ; 33, 35) avec lequel il coopère et au moins l'ensemble comprenant les treuils de traction et de rappel (14, 16 resp. 24, 26; 34, 36), les câbles de traction et de rappel (13, 15 resp. 23, 25 ; 33, 35) et l'organe actif (12 resp. 22) introduit dans la conduite (17 resp. 27 ; 37) étant amovible.

2. Installation selon la revendication 1, caractérisée en ce que chaque dispositif d'émission (10) comprend une conduite fixe (17) enterrée à une profondeur inférieure à environ cinq mètres sous la surface du sol, ainsi qu'un ensemble amovible comprenant un organe actif constitué par une source sismique (12), un câble (13) de traction et d'alimentation de la source sismique (12), un treuil de traction (14), un câble de rappel (15) et un treuil de rappel (16).

3. Installation selon la revendication 1, caractérisée en ce que chaque dispositif de réception (20) comprend une conduite fixe (27) enterrée à une profondeur inférieure à environ cinq mètres sous la surface du sol (1) ainsi qu'un ensemble amovible comprenant un organe actif constitué par un capteur acoustique ou sismique (22), un câble (23) de traction, d'alimentation et d'exploitation du capteur acoustique ou sismique (22), un treuil de traction (24), un câble de rappel (25) et un treuil de rappel (26).

4. Installation selon la revendication 1, caractérisée en ce que chaque dispositif d'émission (10) ou de réception (20) comprend une conduite fixe (17 resp. 27) enterrée à une profondeur inférieure à environ cinq mètres sous la surface du sol ainsi qu'un ensemble amovible comprenant un organe actif (12 resp. 22), un câble (13 resp. 23) de traction, d'alimentation et d'exploitation de l'organe actif (12 resp. 22), un treuil de traction (14 resp. 24), un câble de rappel (15 resp. 25) et un treuil de rappel (16 resp. 26).

5. Installation selon l'une quelconque des revendications 1 à 4, caractérisée en ce qu'elle comprend un module transportable comprenant des moyens d'alimentation des dispositifs actifs (10;110) d'émission sismique et des moyens d'exploitation des informations délivrées par les dispositifs de réception (20; 120).

6. Installation selon la revendication 4, caractérisée en ce que les conduites (17) enterrées des dispositifs d'émission (10) sont sensiblement parallèles aux conduites (27) enterrées des dispositifs de réception (20).

7. Installation selon la revendication 4, caractérisée en ce que les conduites (17) enterrées des dispositifs d'émission (10) sont sensiblement perpendiculaires aux conduites (27) enterrées des dispositifs de réception (20).

8. Installation selon la revendication 2, caractérisée en ce que les dispositifs de réception (120) comprennent des capteurs acoustiques ou sismiques (122) amovibles disposés au niveau de la surface du sol (1) ainsi qu'un module extérieur transportable (121) comprenant des moyens d'alimentation des capteurs (122) et des moyens d'exploitation des informations délivrées par ces capteurs (122).

9. Installation selon la revendication 2, caractérisée en ce que les dispositifs de réception (120) comprennent des capteurs acoustiques ou sismiques (122) fixes enterrés à faible profondeur au voisinage des conduites enterrées fixes (17) ainsi qu'un module extérieur transportable ou enterré (121) comprenant des moyens d'alimentation des capteurs (122) et des moyens d'exploitation des informations délivrées par ces capteurs (122).

10. Installation selon la revendication 2, caractérisée en ce que les dispositifs de réception (120) comprennent des capteurs acoustiques ou sismiques (122) disposés dans un puits (5) essentiellement vertical ainsi qu'un module extérieur transportable (121) comprenant des moyens d'alimentation des capteurs (122) et des moyens d'exploitation des informations délivrées par ces capteurs (122).

11. Installation selon la revendication 3, caractérisée en ce que les dispositifs (110) d'émission sismique comprennent des sources sismiques (112) placées dans un moyen de transport au-dessus de la surface du sol (1) et associées à des moyens (111) d'alimentation des sources sismiques (112).

12. Installation selon la revendication 3, caractérisée en ce que les dispositifs (110) d'émission sismique comprennent des sources sismiques (112) fixes enterrées à faible profondeur entre la surface du sol (1) et les conduites enterrées fixes (27) des dispositifs de réception (20) ainsi qu'un module extérieur transportable comprenant des moyens (111) d'alimentation des sources sismiques (112).

13. Installation selon la revendication 3, caractérisée en ce que les dispositifs (110) d'émission sismique comprennent des sources sismiques (112) disposées dans un puits (5) essentiellement vertical ainsi qu'un module extérieur transportable comprenant des moyens (111) d'alimentation des sources sismiques (112).

14. Installation selon la revendication 2, caractérisée en ce que les conduites enterrées (17) des dispositifs d'émission (10) sont constituées par des tubes haute pression, notamment métalliques, qui se dilatent légèrement pour transmettre la pression.

15. Installation selon la revendication 3, caractérisée en ce que les conduites enterrées (27) des dispositifs de réception (20) sont constituées par des tubes en polyéthylène.

16. Installation selon l'une quelconque des revendications 1 à 4, caractérisée en ce que les conduites (17, 27) des dispositifs d'émission (10) ou de réception (20) sont constituées par des tubes en acier tressé enveloppé par un polymère.

17. Installation selon la revendication 1, caractérisée en ce que le dispositif d'émission (10) et le dispositif de réception (20) sont combinés en un dispositif mixte unique (30) comprenant une conduite fixe unique (37) et un ensemble amovible comprenant un premier organe actif constitué par une source sismique (12), un deuxième organe actif constitué par un capteur acoustique ou sismique (22) relié mécaniquement par un câble intermédiaire (39) à la source sismique (12), un câble unique (33) de traction, d'alimentation et d'exploitation de la source sismique (12) et du capteur acoustique ou sismique (22), un treuil de traction (34), un câble de rappel unique (35) et un treuil de rappel (36).

18. Installation selon la revendication 17, caractérisée en ce que ladite conduite fixe unique (37) est enterrée à une profondeur inférieure à environ cinq mètres sous la surface du sol (1).

19. Installation selon la revendication 17, caractérisée en ce que ladite conduite fixe unique (37) est disposée sur la surface du sol (1) dans une zone immergée telle qu'une étendue lacustre, marine ou océanique (6) et en ce que le treuil de traction (34), le treuil de rappel (36), les moyens de mesure de la longueur du câble (33, 35) ainsi qu'un module transportable comprenant des moyens d'alimentation des premier et deuxième organes actifs (12, 22) sont placés dans des embarcations (8, 9) flottant sur ladite étendue lacustre, marine ou océanique.
